# EUROPÄISCHE PATENTANMELDUNG

(11) **EP 0 580 204 A2**
(43) Veröffentlichungstag der Anmeldung: **26.01.1994**
(21) Anmeldenummer: 93201925.0
(22) Anmeldetag: 01.07.1993
(51) Int. Cl.: G11B 15/675

(54) **Aufzeichnungs- und/oder Wiedergabegerät für eine Magnetbandkassette**

(30) Priorität: 07.07.1992 AT 1389/92
(71) Anmelder: N.V. Philips' Gloeilampenfabrieken, NL-5621 BA Eindhoven (NL)
(72) Erfinder: Gielkens, Marc, c/o Int. Octrooibureau B.V., NL-5656 AA Eindhoven (NL); Veigl, Johann, c/o Int. Octrooibureau B.V., NL-5656 AA Eindhoven (NL)
(74) Vertreter: Rolfes, Johannes Gerardus Albertus

(57) **Zusammenfassung**

Ein Gerät (1) für eine Magnetbandkassette (2), die einen verstellbaren Verschlußteil (16) zum Verschließen mindestens einer Durchgangsöffnung (10, 11, 12) in einer Seitenwand (6) der Kassette (2) aufweist, weist eine Kassettenaufnahmeeinrichtung (25) zum Aufnehmen der Kassette (2) und eine Verstelleinrichtung (77) zum Verstellen des Verschlußteiles (16) der Kassette (2) auf. Dabei ist das Gerät (1) mit einer verstellbaren Kassettenniederhalteeinrichtung (60) versehen, die einen die Deckenwand (4) der Kassette (2) zumindest teilweise überdeckenden Niederhalterträger (66) aufweist, und ist die Verstelleinrichtung (77) an dem Niederhalterträger (66) verstellbar gehalten.

## Beschreibung

Die Erfindung bezieht sich auf ein Aufzeichnungs- und/oder Wiedergabegerät für eine Magnetbandkassette, die ein quaderförmiges Gehäuse mit einer Deckenwand, einer Bodenwand und vier Seitenwänden, von denen eine zumindest mit einer Durchgangsöffnung versehen ist, und einen zwischen einer Schließstellung und einer Offenstellung verstellbaren Verschlußteil zum Verschließen der Durchgangsöffnung aufweist, mit einem Chassis, mit einer am Chassis gehaltenen, zum Aufnehmen einer Kassette vorgesehenen Kassettenaufnahmeeinrichtung und mit einer zum Verstellen des Verschlußteiles der von der Kassettenaufnahmeeinrichtung gehaltenen Kassette vorgesehenen Verstelleinrichtung, die einen die Deckenwand der Kassette zumindest teilweise überdeckenden verstellbaren Trägerteil und einen von dem Trägerteil abstehenden, mit dem Verschlußteil der Kassette in Eingriff bringbaren Verstellteil aufweist, der bei einer Relativbewegung zwischen ihm und dem Verschlußteil dessen Verstellung steuert.

Ein solches Gerät gemäß der in dem vorstehenden ersten Absatz angeführten Gattung ist beispielsweise aus der EP O 434 143 A2 bekannt. Bei diesem bekannten Gerät ist der Verstellmechanismus zum Steuern des Öffnens und Schließens des Verschlußteiles an der Kassettenaufnahmeeinrichtung vorgesehen, wobei die Verstelleinrichtung an der Kassettenaufnahmeeinrichtung verstellbar gehalten bzw. gelagert ist. Um ein stets sicheres Öffnen bzw. Schließen des Verschlußteiles zu gewährleisten, müssen der Verstellteil der Verstelleinrichtung und der Verschlußteil der Kassette in einem engen Lagetoleranzbereich miteinander zusammenwirken. Die Relativlage zwischen dem Verstellteil der Verstelleinrichtung und dem Verschlußteil der Kassette hängt aber bei dem bekannten Gerät von mehreren Einflußparametern ab, nämlich erstens von der Lage der Kassette in der Kassettenaufnahmeeinrichtung bzw. auf die Kassette unterstützenden Positionierteilen, zweitens von den Dimensionen der in die Kassettenaufnahmeeinrichtung eingesetzten Kassette und drittens von der Lage des Verstellteiles in Relation zur Kassettenaufnahmeeinrichtung. Hiebei können die Fälle eintreten, daß beispielsweise eine Kassette nicht satt auf der Kassettenaufnahmeeinrichtung bzw. auf den Positionierteilen aufliegt, daß eine Kassette zumindest in der für das Öffnen bzw. Schließen ihres Verschlußteiles wesentlichen Dimension deutlich von einem vorgegebenen Sollwert abweicht und daß der Verstellteil der Verstelleinrichtung von einer Sollposition relativ weit entfernt liegt. Bei einem ungünstigen Zusammentreffen dieser Fälle, also bei einem ungünstigen Zusammentreffen der toleranzabhängigen Einflußparameter, die für ein sicheres Öffnen bzw. Schließen des Verschlußteiles maßgeblich sind, kann es passieren, daß der Verstellteil der Verstelleinrichtung beispielsweise bei einem an sich gewünschten Öffnervorgang mit dem Verschlußteil der Kassette gar nicht in Wirkverbindung kommt. Es ist somit bei dem bekannten Gerät bei ungünstigen Toleranzverhältnissen für keine einwandfreie Verstellfunktion für den Verschlußteil einer Kassette gesorgt.

Die Erfindung hat sich zur Aufgabe gestellt, die vorstehend angeführten Schwierigkeiten zu vermeiden und bei einem Gerät der im ersten Absatz angeführten Gattung dafür zu sorgen, daß stets eine einwandfreie Verstellfunktion für den Verschlußteil einer Kassette gewährleistet ist. Hiefür ist die Erfindung dadurch gekennzeichnet, daß eine verstellbar gehaltene Niederhalteeinrichtung vorgesehen ist, die einen Niederhalterträger aufweist, der in eine die Deckenwand der Kassette zumindest teilweise überdeckende Position bringbar ist und der mit mindestens einem auf die Deckenwand der Kassette aufsetzbaren Niederhalterteil versehen ist, und mit der eine in die Kassettenaufnahmeeinrichtung eingesetzte Kassette nach dem Aufsetzen des Niederhalterteiles auf ihre Deckenwand mit ihrer Bodenwand gegen die Kassettenauf nahmeeinrichtung drückbar ist, und daß die Verstelleinrichtung an dem Niederhalterträger der Niederhalteeinrichtung verstellbar gehalten ist und daß der Verstellteil der Verstelleinrichtung nach dem Aufsetzen des Niederhalterteiles auf die Deckenwand der Kassette mit dem Verschlußteil der Kassette in Eingriff bringbar ist. Hiedurch ist auf besonders einfache Weise erreicht, daß die Deckenwand einer in die Kassettenaufnahmeeinrichtung eingesetzten Kassette, deren Verschlußteil geöffnet bzw. geschlossen werden soll, eine Referenzfläche zur Festlegung der Position der Verstelleinrichtung für den Verschlußteil gegenüber der Kassette bildet, was zur Folge hat, daß eine in einem sehr engen Toleranzbereich liegende Relativlage des Verstellteiles der Verstelleinrichtung gegenüber dem Verschlußteil der Kassette erreicht wird. Aufgrund dieses besonders engen Toleranzbereiches der vorerwähnten Relativlage ist praktisch stets für eine sichere Verstellfunktion für den Verschlußteil der Kassette gesorgt.

Bei einem Gerät für eine Magnetbandkassette, die einen längs einer Seitenwand derselben parallel zu einer ersten Verstellrichtung verschiebbaren Verschlußteil aufweist, hat sich als vorteilhaft erwiesen, wenn die Kassettenaufnahmeeinrichtung am Chassis verstellbar gehalten ist und zwischen einer Ladeposition und einer Zwischenposition parallel zu der Deckenwand der Kassette und parallel zu der ersten Verstellrichtung und zwischen der Zwischenposition und einer Betriebsposition senkrecht zu der Deckenwand der Kassette verstellbar ist, daß der Niederhalterträger am Chassis im wesentlichen senkrecht zur Deckenwand der Kassette verstellbar gehalten ist und beim Verstellen der Kassettenaufnahmeeinrichtung von ihrer Ladeposition in ihre Zwischenposition mit seinem Niederhalterteil auf die Deckenwand der Kassette aufgesetzt wird und daß eine Steuereinrichtung für die von dem Niederhalterträger der Niederhalteeinrichtung gehaltene Verstelleinrichtung vorgesehen ist, die beim Verstellen der Kassettenaufnahmeeinrichtung von ihrer Ladeposition in ihre Zwischenposition parallel zur ersten Verstellrichtung nach dem Aufsetzen des Niederhalterteiles auf die Deckenwand der Kassette die Verstelleinrichtung in eine das Zusammenwirken des Verstellteiles mit dem Verschlußteil der Kassette bewirkende Lage steuert, um den Verschlußteil parallel zu der ersten Verstellrichtung von seiner Schließstellung in seine Offenstellung zu verstellen. Auf diese Weise ist erreicht, daß eine Kassette automatisch in das Gerät eingezogen und zu einer in dem Gerät untergebrachten Bandantriebs- und - abtasteinrichtung gebracht werden kann, wobei zugleich beim Einziehen der Kassette in das Gerät das Öffnen des längs einer Seitenwand der Kassette verschiebbaren Verschlußteiles erfolgt.

Weiters hat sich als vorteilhaft erwiesen, wenn der Niederhalterträger der Niederhalteeinrichtung im wesentlichen durch eine bei auf die Deckenwand aufgesetztem Niederhalterteil die Deckenwand der Kassette zumindest größtenteils überdeckende Niederhalterplatte gebildet ist und die an der Niederhalterplatte verstellbar gehaltene Verstelleinrichtung einen im wesentlichen plattenförmigen, parallel zur Niederhalterplatte verlaufend angeordneten Verstellhebel aufweist, der an der Niederhalterplatte um ein Schwenklager verschwenkbar gelagert ist. Eine solche Ausbildung ist im Hinblick auf die Realisierung eines Gerätes mit einer möglichst geringen Bauhöhe vorteilhaft.

Als vorteilhaft hat sich weiters erwiesen, wenn von dem plattenförmigen Verstellhebel als Verstellteil ein Verstellstift und weiters ein Steuerfortsatz zum Zusammenwirken mit der Steuereinrichtung für die Verstelleinrichtung im wesentlichen senkrecht abstehen. Dies ist im Hinblick auf eine möglichst einfache Ausbildung und im Hinblick auf ein möglichst betriebssicheres Zusammenwirken zwischen der Verstelleinrichtung und dem Verschlußteil vorteilhaft.

Die Steuereinrichtung für die Verstelleinrichtung kann beispielsweise zur zwangsweisen Steuerung der Verstellung der Verstelleinrichtung ausgebildet sein. Als vorteilhaft hat sich aber erwiesen, wenn eine einerseits an der Niederhalterplatte und andererseits an dem plattenförmigen Verstellhebel angreifende Verstellfeder für den Verstellhebel vorgesehen ist und die Steuereinrichtung für die Verstelleinrichtung eine abgewinkelt verlaufend ausgebildete Steuerwand aufweist, an die der vom Verstellhebel abstehende Steuerfortsatz mit der Kraft der Verstellfeder andrückbar ist. Eine solche Ausbildung ist im Hinblick auf ein möglichst unkritisches Ineingriffbringen des Verstellteiles der Verstelleinrichtung mit dem Verschlußteil einer Kassette vorteilhaft.

Als besonders vorteilhaft hat sich erwiesen, wenn das Schwenklager zwischen dem plattenförmigen Verstellhebel und der Niederhalterplatte durch eine Stift-Langloch-Verbindung gebildet ist und daß der Stift in dem Langloch parallel zur ersten Verstellrichtung verstellbar ist. Auf diese Weise ist erreicht, daß bei von dem Verstellteil in seine Offenstellung verstellt gehaltenem Verschlußteil von der Verstelleinrichtung keine äußeren Kräfte auf die Kassette ausgeübt werden können.

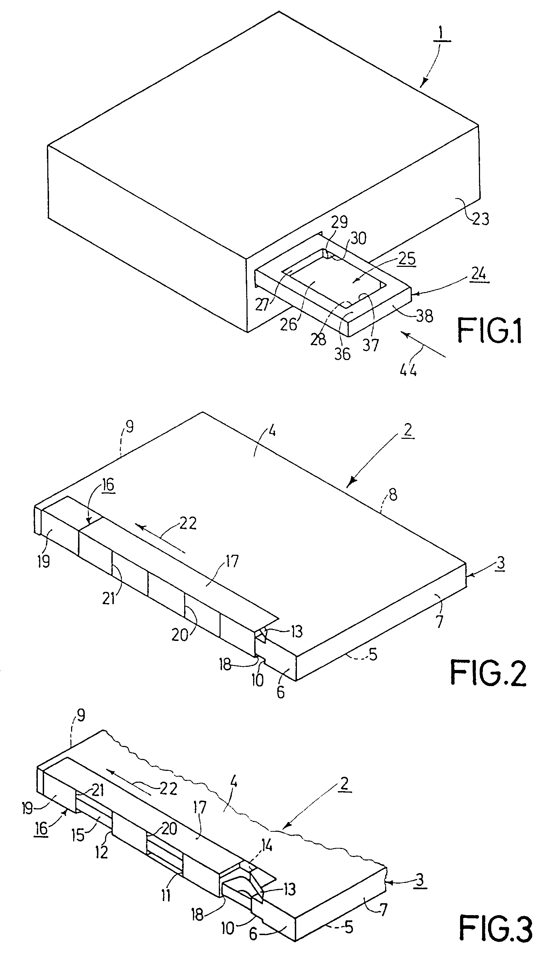

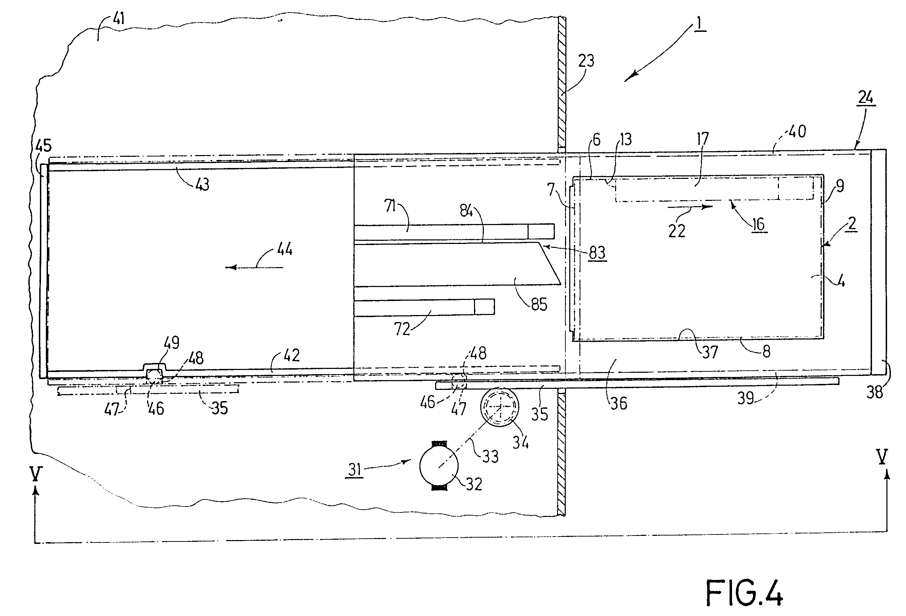

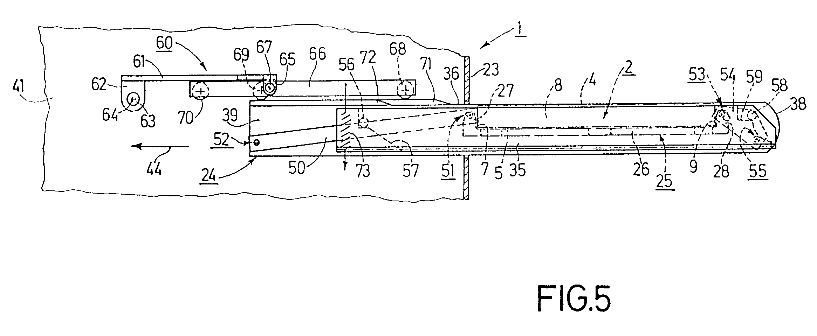

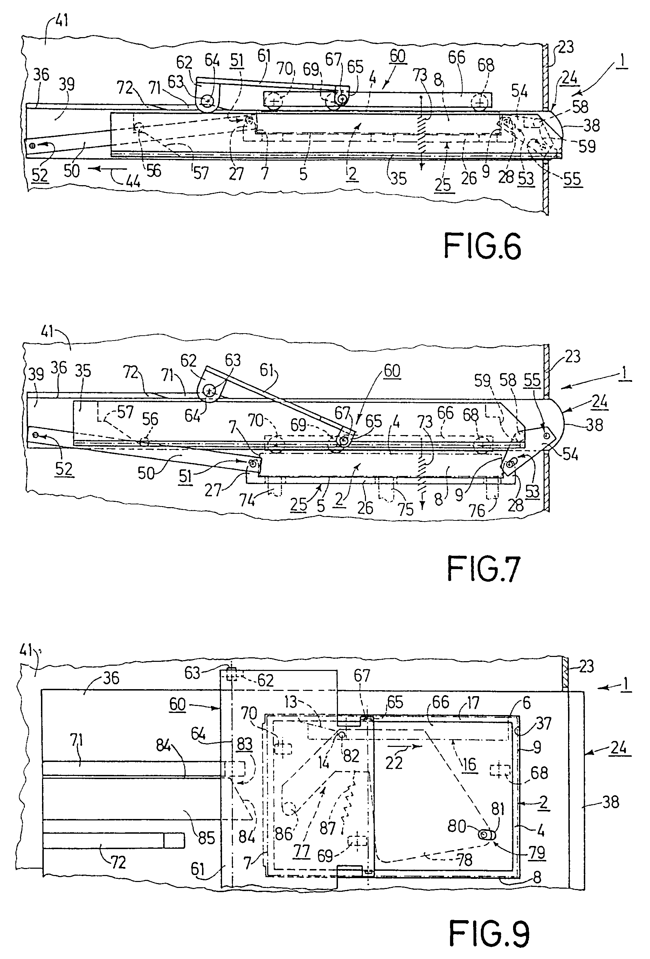

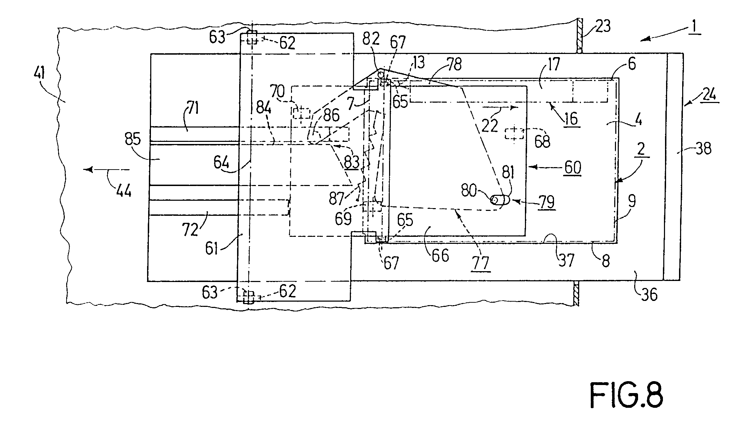

Die Erfindung wird im folgenden anhand eines in den Zeichnungen dargestellten Ausführungsbeispieles näher beschrieben, auf das die Erfindung jedoch nicht beschränkt sein soll. Die Fig. 1 zeigt schematisch in Schrägansicht ein Aufzeichnungs- und Wiedergabegerät für eine ein Magnetband als Aufzeichnungsträger enthaltende Kassette, das eine an einer aus dem Gerät herausschiebbaren und in das Gerät hineinschiebbaren Lade verstellbar angebrachte Kassettenaufnahmeeinrichtung zum Aufnehmen der Kassette aufweist. Die Fig. 2 zeigt schematisch in Schrägansicht eine in das Gerät gemaß Fig. 1 einsetzbare Kassette, die einen zwischen einer Schließstellung und einer Offenstellung verschiebbaren Verschlußteil aufweist, der in Fig. 2 in seiner Schließstellung befindlich dargestellt ist. Die Fig. 3 zeigt auf analoge Weise wie die Fig. 2 die Kassette gemäß Fig. 2, wobei ein Teil derselben weggerissen ist und wobei der Verschlußteil in seiner Offenstellung befindlich dargestellt ist. Die Fig. 4 zeigt schematisch in einem gegenüber der Fig. 1 größeren Maßstab und in Draufsicht und bei größtenteils weggerissen dargestelltem Gerät ein Detail des Gerätes gemäß Fig. 1, das die Lade des Gerätes gemäß Fig. 1 und die Antriebseinrichtung für diese Lade betrifft, wobei die Lade in einer Endposition, in der sie aus dem Gerät herausgeschoben ist, befindlich dargestellt ist. Die Fig. 5 zeigt schematisch im gleichen Maßstab wie in Fig. 4 und in einer Seitenansicht gemaß der Linie V-V in Fig. 4 die Lade des Gerätes gemäß den Figuren 1 und 4 sowie die an dieser Lade verstellbar gehaltene Kassettenaufnahmeeinrichtung und eine Kassettenniederhalteeinrichtung des Gerätes, wobei die Lade ebenfalls in ihrer Endposition, in der sie aus dem Gerät herausgeschoben ist, befindlich, die Kassettenaufnahmeeinrichtung in einer Ladeposition befindlich und die Kassettenniederhalteeinrichtung in einer Ruheposition befindlich dargestellt sind. Die Fig. 6 zeigt in analoger Weise wie die Fig. 5 einen Teil des Gerätes gemäß den Figuren 1, 4 und 5, wobei die Lade in einer Endposition, in der sie in das Gerät hineingeschoben ist, befindlich, die Kassettenaufnahmeeinrichtung in einer Zwischenposition befindlich und die Kassettenniederhalteeinrichtung in einer eine Kassette bereits belastenden ersten Niederhalteposition befindlich dargestellt sind. Die Fig. 7 zeigt analog wie die Figuren 5 und 6 den in den Figuren 5 und 6 dargestellten Teil des Gerätes gemäß den Figuren 1, 4, 5 und 6, wobei die Lade des Gerätes in ihrer Endposition, in der sie in das Gerät hineingeschoben ist, befindlich, die Kassettenaufnahmeeinrichtung in einer Betriebsposition befindlich und die Kassettenniederhalteeinrichtung in einer eine Kassette belastenden zweiten Niederhalteposition befindlich dargestellt sind. Die Fig. 8 zeigt im gleichen Maßstab wie in den Figuren 5, 6 und 7 denselben Teil des Gerätes wie die Figuren 5, 6 und 7, jedoch in Draufsicht auf die Lade des Gerätes, wobei die Lade in einer zwischen ihren beiden Endpositionen liegenden Zwischenposition befindlich dargestellt ist. Die Fig. 9 zeigt in analoger Weise wie die Fig. 8 den in der Fig. 8 dargestellten Teil des Gerätes gemäß den Figuren 1 und 4 bis 8, wobei die Lade des Gerätes in ihrer Endposition, in der sie in das Gerät hineingeschoben ist, befindlich dargestellt ist.

In Fig. 1 ist auf schematische Weise ein Aufzeichnungs-und Wiedergabegerät 1 dargestellt, das zum Aufzeichnen und Wiedergeben von Informationssignalen, beispielsweise Sprachsignalen oder Musiksignalen, auf einem Magnetband ausgebildet ist. Das Magnetband ist hiebei in einer Kassette 2 untergebracht, die in den Figuren 2 und 3 schematisch dargestellt ist und die in den Figuren 4 bis 9 nur mit einer strichpunktierten Linie angedeutet ist.

Die Kassette 2 weist ein quaderförmiges Gehäuse 3 mit einer Deckenwand 4, einer Bodenwand 5, die in den Figuren 2 und 3 nicht sichtbar ist, und vier Seitenwänden 6, 7, 8 und 9 auf, von denen die beiden Seitenwände 8 und 9 in den Figuren 2 und 3 ebenfalls nicht sichtbar sind. In der vorderen langen Seitenwand 6 des Gehäuses 3 der Kassette 2 sind drei Durchgangsöffnungen 10, 11 und 12 vorgesehen. Die Durchgangsöffnung 10 erstreckt sich hiebei zusätzlich auch in die Deckenwand 4 und in die Bodenwand 5 des Gehäuses 3 der Kassette 2, wobei die Durchgangsöffnung 10 im Bereich der Deckenwand 4 von einem gegenüber der Seitenwand 6 geneigt verlaufenden, abgewinkelt ausgebildeten und in die Seitenwand 6 mündenden Wandabschnitt 13 begrenzt ist, der in einen senkrecht zur Seitenwand 6 verlaufenden, in den Figuren 2 und 3 nicht sichtbaren Wandabschnitt 14 übergeht. Die Durchgangsöffnung 12 erstreckt sich zusätzlich auch in die Bodenwand 5 des Gehäuses 3 der Kassette 2. Durch die Durchgangsöffnungen 10, 11 und 12 ist das in der Kassette 2 untergebrachte Magnetband 15, das hiebei in der Kassette 2 zwischen zwei nicht dargestellten, rotierend antreibbaren Wickelkernen verläuft, für mindestens einen Magnetkopf, der durch die Durchgangsöffnung 11 hindurchtreten kann, und für zwei Andruckrollen zugänglich, die durch die Durchgangsöffnungen 10 und 12 mit dem Magnetband 15 in Wirkverbindung treten können und dabei das Magnetband 15 gegen Antriebswellen drücken, die durch die in der Bodenwand 5 vorgesehenen Bereiche der Durchgangsöffnungen 10 und 12 in die Kassette 2 hinter das Magnetband 15 einführbar sind.

Zum Verschließen der Durchgangsöffnungen 10, 11 und 12 ist die Kassette 2 mit einem Verschlußteil 16 versehen. Der Verschlußteil 16 ist durch einen im Querschnitt im wesentlichen U-förmig ausgebildeten Blechteil gebildet, der einen plattenförmigen, parallel zur Deckenwand 4 verlaufenden ersten Schenkelteil 17, einen plattenförmigen, parallel zur Bodenwand 5 verlaufenden zweiten Schenkelteil 18 und einen plattenförmigen, parallel zur vorderen langen Seitenwand 6 verlaufenden Stegteil 19 aufweist. In dem Stegteil 19 sind zwei Fenster 20 und 21 vorgesehen, wobei sich das Fenster 21 auch in den zweiten Schenkelteil 18 hinein erstreckt. Der U-förmige Verschlußteil 16 ist längs der Seitenwand 6 parallel zu einer ersten Verstellrichtung, die in den Figuren 2 und 3 mit einem Pfeil 22 angegeben ist, zwischen einer in Fig. 2 dargestellten Schließstellung und einer in Fig. 3 dargestellten Offenstellung und umgekehrt verstellbar, wobei der Verschlußteil 16 zwischen diesen beiden Stellungen hin und her verschiebbar geführt ist, worauf aber hier nicht näher eingegangen ist. Im Bereich des zweiten Schenkelteiles 18 greift an dem Verschlußteil 16 eine zwischen dem zweiten Schenkelteil 18 und der Bodenwand 5 des Gehäuses 3 vorgesehene, nicht dargestellte Rückstellfeder an, die danach trachtet, den Verschlußteil 16 in seiner Schließstellung zu halten. Bezüglich der Kassette 2 kann erwähnt werden, daß eine solche Kassette beispielsweise aus den EP O 434 143 A2, EP O 480 514 A2 und EP O 480 515 A2 bekannt ist, deren Offenbarungsgehalt hiemit durch diesen Hinweis auf diese Veröffentlichungen als hier mitaufgenommen gilt (herewith incorporated by reference).

Wie aus Fig. 1 ersichtlich ist, weist das Gerät 1 eine durch eine Öffnung in der Vorderwand 23 des Gehäuses des Gerätes 1 aus dem Gerät 1 in eine in Fig. 1 dargestellte Endposition herausschiebbare und entgegengesetzt in eine durch die Öffnung in der Vorderwand 23 hindurch in das Gerät 1 in eine im Gerät befindliche Endposition hineinschiebbare Lade 24 auf. An der Lade 24 ist, wie nachfolgend anhand der Figuren 5 bis 7 noch detailliert beschrieben ist, eine Kassettenaufnahmeeinrichtung 25 verstellbar gehalten, die zum Aufnehmen einer Kassette 2 dient. Die Kassettenaufnahmeeinrichtung 25 ist im wesentlichen wannenförmig ausgebildet und weist eine mit in Fig. 1 nicht dargestellten Durchbrüchen versehene Bodenwand 26 und zwei kurze Seitenwände 27 und 28, von denen in Fig. 1 nur die Seitenwand 27 sichtbar ist, sowie zwei lange Seitenwände auf, von denen in Fig. 1 nur die Seitenwand 29 sichtbar ist. In der Seitenwand 29 ist eine Durchgangsöffnung 30 vorgesehen, in deren Bereich die mit den Durchgangsöffnungen 10, 11 und 12 versehene Seitenwand 6 einer Kassette 2 zu liegen kommt, wenn die Kassette 2 in die Kassettenaufnahmeeinrichtung 25 eingesetzt ist. Durch die Durchgangsöffnung 30 in der Seitenwand 29 der Kassettenaufnahmeeinrichtung 25 können der zuvor erwähnte Magnetkopf und die Andruckrollen mit dem Magnetband 15 in der Kassette 2 in Wirkverbindung gebracht werden.

Wenn die Lade 24 des Gerätes 1 aus dem Gerät 1 herausgeschoben ist, wie dies in den Figuren 1, 4 und 5 dargestellt ist, kann eine Kassette 2 in die Kassettenaufnahmeeinrichtung 25 eingesetzt werden, was in der Weise zu erfolgen hat, daß die Seitenwand 6 des Gehäuses 3 der Kassette 2 der Seitenwand 29 der Kassettenaufnahmeeinrichtung 25 gegenüberliegt. Nachfolgend kann die Lade 24 in das Gerät 1 eingezogen werden, was beim vorliegenden Gerät 1 durch motorisches Antreiben der Lade 24 erfolgt.

Nachfolgend ist anhand der Fig. 4 eine Antriebseinrichtung 31 zum motorischen Verstellen der Lade 24 beschrieben. Diese Antriebseinrichtung 31 weist einen durch Betätigen von zwei nicht dargestellten Tasten in entgegengesetzten Drehrichtungen einschaltbaren Motor 32 auf, mit dem über eine nur schematisch mit einer strichpunktierten Linie angedeutete Antriebsverbindung 33 ein Antriebszahnrad 34 antreibbar ist, das mit einer mit der Lade 24 gekoppelten Zahnstange 35 in Eingriff steht.

Die Lade 24 besteht im wesentlichen aus einer Deckenwand 36, in der eine Öffnung 37 vorgesehen ist, durch die hindurch eine Kassette 2 in die an der Lade 24 verstellbar gehaltene Kassettenaufnahmeeinrichtung 25 einsetzbar ist. An ihrer Vorderseite ist die Lade 24 mit einer gekrümmt verlaufenden vorderen Seitenwand 38 abgeschlossen. Seitlich ist die Lade mit zwei Seitenwänden 39 und 40 versehen. Zwischen diesen beiden Seitenwänden 39 und 40 sind zwei mit einem schematisch angedeuteten Chassis 41 des Gerätes 1 verbundene, von dem Chassis 41 senkrecht abstehende Führungsleisten 42 und 43 angeordnet, mit denen die Lade 24 parallel zur Richtung des Pfeiles 44, also parallel zur ersten Verstellrichtung 22 des Verschlußteiles 16 der Kassette 2 verschiebbar geführt ist. An ihrem von der Vorderwand 23 des Gehäuses des Gerätes 1 abgewandten Ende sind die beiden Führungsleisten 42 und 43 über eine Anschlagleiste 45 verbunden, die die Einschubbewegung der Lade 24 in das Gerät 1 begrenzt und auf diese Weise die Endposition der in das Gerät 1 eingeschobene Lade 24 festlegt. Es sei erwähnt, daß die andere Endposition der Lade 24, in der dieselbe aus dem Gerät 1 herausgeschoben ist, mit Hilfe eines nicht dargestellten elektrischen Schalters festgelegt ist, der bei Erreichen dieser Endposition von der Lade 24 betätigt wird und der den Motor 32 abschaltet.

Die Zahnstange 35 ist in ihrer Längsrichtung an der Seitenwand 39 der Lade 24 verstellbar geführt. Die Zahnstange 35 ist über eine Koppelungskugel 46, die sich bei der in Fig. 4 mit vollen Linien dargestellten Endposition der Lade 24 zum Teil in einem Loch 47 in der Zahnstange 35 und zum Teil in einem Loch 48 in der Seitenwand 39 der Lade 24 befindet, mit der Lade 24 formschlüssig gekoppelt.

Beim Antrieb der Zahnstange 35 vom Motor 32 her in Richtung des Pfeiles 44 wird über die Koppelungskugel 46 und die Seitenwand 39 die Lade 24 mitgenommen und daher in Richtung des Pfeiles 44 verstellt. Diese Verstellung erfolgt so lange, bis die Lade 24 gegen die Anschlagleiste 45 stößt, wie dies in Fig. 4 mit strichpunktierten Linien angedeutet ist, mit denen die andere Endposition der Lade 24 dargestellt ist. Wenn die Lade 24 diese Endposition erreicht hat, liegt der Koppelungskugel 46 in der Führungsleiste 42 eine Vertiefung 49 gegenüber, in die die Koppelungskugel 46 durch die von der Zahnstange 35 auf sie ausgeübte Kraft hineingedrückt wird, wie dies in Fig. 4 ebenfalls mit strichpunktierten Linien dargestellt ist. Sobald die Koppelungskugel 46 in die Vertiefung 49 hineingedrückt und folglich aus dem Loch 47 in der Zahnstange 35 entfernt ist, ist keine Koppelung zwischen der Zahnstange 35 und der Lade 24 mehr gegeben und kann daher die Zahnstange 35 weiterbewegt werden, was beim vorliegenden Gerät 1 auch tatsächlich der Fall ist, weil die Zahnstange 35 während dieses Weiterbewegens die Verstellung der Kassettenaufnahmeeinrichtung 25 von einer Zwischenposition derselben in eine Betriebsposition derselben steuert, wie dies nachfolgend noch anhand der Figuren 6 und 7 beschrieben ist.

Anhand der Figuren 5 bis 7 ist nachfolgend beschrieben, auf welche Weise die Kassettenaufnahmeeinrichtung 25 an der Lade 24 und über die Lade 24 am Chassis 41 verstellbar gehalten ist. Zum verstellbaren Halten der Kassettenaufnahmeeinrichtung 25 an der gegenüber dem Chassis 41 verstellbaren Lade 24 ist die Kassettenaufnahmeeinrichtung 25 im Bereich ihrer schmalen Seitenwand 27 mit einem ersten Hebel 50 über eine Gelenkverbindung 51 verschenkbar verbunden. Der erste Hebel 50 ist an seinem anderen Ende über eine weitere Gelenkverbindung 52 mit der Lade 24 verschwenkbar verbunden. Weiters ist die Kassettenaufnahmeeinrichtung 25 im Bereich ihrer zweiten schmalen Seitenwand 28 über eine durch eine Stift-Langloch-Verbindung 53 gebildete weitere Gelenkverbindung mit einem zweiten Hebel 54 verschwenkbar verbunden, der an seinem anderen Ende über eine weitere Gelenkverbindung 55 mit der Lade 24 verschwenkbar verbunden ist. Von dem ersten Hebel 50 steht seitlich ein von der Lade 24 zu der Zahnstange 35 hin gerichteter Steuerstift 56 ab. Der Steuerstift 56 wirkt dabei mit einer an der Zahnstange 35 vorgesehenen Steuerkulisse 57 zusammen. Ebenso steht auf dieselbe Weise vom zweiten Hebel 54 ein weiterer Steuerstift 58 seitlich ab, der mit einer weiteren Steuerkulisse 59 an der Zahnstange 35 zusammenwirkt. Durch das Zusammenwirken der Steuerstifte 56 und 58 mit den Steuerkulissen 57 und 59 ist die Verstellung der Kassettenaufnahmeeinrichtung 25 zwischen der in Fig. 6 dargestellten Zwischenposition und der in Fig. 7 dargestellten Betriebsposition steuerbar.

Das Gerät 1 weist ferner eine Kassettenniederhalteeinrichtung 60 auf, die am Chassis 41 im wesentlichen senkrecht zur Deckenwand 4 der Kassette 2 verschwenkbar gelagert ist, wie dies aus den Figuren 5 bis 9 ersichtlich ist. Zur verschwenkbaren Lagerung der Niederhalteeinrichtung 60 weist die Niederhalteeinrichtung 60 eine Lagerplatte 61 auf, die mit zwei senkrecht abstehenden Lagerlappen 62 versehen ist, die um zwei auf nicht näher dargestellte Weise am Chassis 41 gehaltene Lagerzapfen 63 verschwenkbar sind, so daß die Lagerplatte 61 und folglich die gesamte Niederhalteeinrichtung 60 um eine Schwenkachse 64 verschwenkbar sind. An dem von den Lagerlappen 62 abgewandten Ende der Lagerplatte 61, in dessen Bereich die Lagerplatte 61 weniger breit ausgebildet ist, stehen von der Lagerplatte 61 zwei weitere Lagerlappen 65 ab, in denen ein Niederhalterträger 66 mit Hilfe von zwei von ihm seitlich abstehenden Lagerbolzen 67 verschwenkbar gelagert ist. Der Niederhalterträger 66 ist hiebei durch eine Niederhalterplatte gebildet. An der Niederhalterplatte 66 sind als Niederhalterteile drei Niederhalterrollen 68, 69 und 70 drehbar gelagert, die auf die Deckenwand 4 der Kassette 2 aufsetzbar sind. Bei in ihrer Endposition, in der sie aus dem Gerät 1 herausgeschoben ist, befindlicher Lade 24 liegt die Niederhalterrolle 68 auf einer an der Lade 24 vorgesehenen, gegenüber der Deckenwand 36 der Lade 24 erhaben ausgebildeten Steuerrippe 71 auf. Weiters liegt in diesem Fall die Niederhalterrolle 69 auf einer weiteren gegenüber der Deckenwand 36 der Lade 24 erhaben ausgebildeten Steuerrippe 72 auf. Durch das Zusammenwirken der Niederhalterrollen 68 und 69 mit den Steuerrippen 71 und 72 kann die Höhenlage der Niederhalterplatte 66 und folglich der Niederhalterrollen 68, 69 und 70 in Relation zu einer in die Kassettenaufnahmeeinrichtung 25 in der Lade 24 eingesetzten Kassette 2 gesteuert werden. In der in Fig. 5 dargestellten Situation ist die Niederhalterplatte 66 über die beiden Niederhalterrollen 68 und 69 von den Steuerrippen 71 und 72 in eine von der Deckenwand 4 einer in die Kassettenaufnahmeeinrichtung 25 eingesetzten Kassette 2 entfernt liegenden Niveaulage gehalten, in der die Niederhalteeinrlchtung 60 ihre in Fig. 5 dargestellte Ruheposition einnimmt. Während einer Verstellung der Lade 24 in ihre in den Figuren 6 und 7 dargestellte Endposition rollen die Niederhalterrollen 68 und 69 von den Steuerrippen 71 und 72 herunter, wobei sie dann über die Deckenwand 4 einer in die Kassettenaufnähmeeinrichtung 25 eingesetzten Kassette 2 hinwegrollen und wobei die Niederhalteplatte 66 in eine die Deckenwand 4 der Kassette 2 teilweise überdeckende Position bringbar ist.

An der Niederhalterplatte 66 greift eine Zugfeder 73 an, die danach trachtet, die Niederhalterplatte 66 bzw. die Niederhalterrollen 68, 69 und 70 gegen die Deckenwand 4 einer in die Kassettenaufnahmeeinrichtung 25 eingesetzen Kassette 2 zu ziehen. Durch die Wirkung der Zugfeder 73 ist somit stets gewährleistet, daß die Niederhalterrollen 68, 69 und 70 satt an der Deckenwand 4 einer Kassette 2 aufliegen, so daß die Niederhalterplatte 66 stets in einer genau definierten Relativlage zur Deckenwand 4 und folglich zur gesamten Kassette 2 gehalten ist. Mit der Kassettenniederhalteeinrichtung 60 ist eine in die Kassettenaufnahmeeinrichtung 25 eingesetzte Kassette 2 nach dem Aufsetzen der Niederhalterrollen 68, 69 und 70 auf die Deckenwand 4 der Kassette 2 mit ihrer Bodenwand 5 gegen die Kassettenaufnahmeeinrichtung 25, und zwar gegen deren Bodenwand 26 drückbar, wie dies in Fig. 6 dargestellt ist, in der die Niederhalteeinrichtung 60 eine erste Niederhalteposition einnimmt. Nach einer Verstellung der Kassettenaufnahmeeinrichtung 25 von ihrer Zwischenposition gemäß Fig. 6 in ihre Betriebsposition gemäß Fig. 7 drückt die Niederhalteeinrichtung 60 die Kassette 2 weiterhin gegen die Bodenwand 26 der Kassettenaufnahmeeinrichtung 25, jedoch ist in dieser Betriebsposition die Kassette 2 von geräteseitigen, durch Öffnungen in der Bodenwand 26 der Kassettenaufnahmeeinrichtung 25 hindurchragenden Positionierstiften 74, 75 und 76 unterstützt, wie dies schematisch mit strichpunktierten Linien in Fig. 7 angedeutet ist, in der die Niederhalteeinrichtung 60 eine zweite Niederhalteposition einnimmt. Durch das Zusammenwirken der Positionierstifte 74, 75 und 76 mit der Bodenwand 5 der Kassette 2 ist eine exakte Betriebslage für die Kassette 2 festgelegt, was im Hinblick auf ein einwandfreies Zusammenwirken des Magnetkopfes mit dem in der Kassette 2 untergebrachten Magnetband 15 von wesentlicher Bedeutung ist.

Das Gerät 1 weist zum Verstellen des Verschlußteiles 16 der von der Kassettenaufnahmeeinrichtung 25 gehaltenen Kassette 2 eine Verstelleinrichtung 77 auf. Dabei ist bei dem vorliegenden Gerät 1 die Verstelleinrichtung 77 vorteilhafterweise an der Niederhalterplatte 66 der Kassettenniederhalteeinrichtung 60 verstellbar gehalten. Die Verstelleinrichtung 77 weist einen die Deckenwand 4 der Kassette 2 teilweise überdeckenden verstellbaren Trägerteil 78 auf, der durch einen plattenförmigen, parallel zur Niederhalterplatte 66 verlaufend angeordneten Verstellhebel gebildet ist, der an der Niederhalterplatte 66 um ein Schwenklager 79 verschwenkbar gelagert ist. Das Schwenklager 79 ist hiebei durch eine Stift-Langloch-Verbindung gebildet, und der Stift 80 ist in dem Langloch 81 der Stift-Langloch-Verbindung 79 im wesentlichen parallel zur ersten Verstellrichtung 22 verstellbar. Die Verstelleinrichtung 77 weist weiters einen von dem als Trägerteil vorgesehenen plattenförmigen Verstellhebel 78 abstehenden, mit dem Verschlußteil 16 der Kassette 2 in Eingriff bringbaren Verstellteil 82 auf, der durch einen zylindrischen Verstellstift gebildet ist und der nach dem Aufsetzen der Niederhalterrollen 68, 69 und 70 auf die Deckenwand 4 der Kassette 2 mit dem Verschlußteil 16 der Kassette 2 in Eingriff bringbar ist.

Weiters ist eine Steuereinrichtung 83 für die von der Niederhalterplatte 66 der Niederhalteeinrichtung 60 gehaltene Verstelleinrichtung 77 vorgesehen, die beim Verstellen der Kassettenaufnahmeeinrichtung 25 von ihrer Ladeposition gemäß Fig. 5 in ihre Zwischenposition gemäß Fig. 6 parallel zur ersten Verstellrichtung 22 nach dem Aufsetzen der Niederhalterrollen 68, 69 und 70 auf die Deckenwand 4 der Kassette 2 die Verstelleinrichtung 77 in eine zum Zusammenwirken des Verstellteiles 82 mit dem Verschlußteil 16 der Kassette 2 bewirkende Lage steuert, um den Verschlußteil 16 parallel zu der ersten Verstellrichtung 22 von seiner Schließstellung in seine Offenstellung zu verstellen. Die Steuereinrichtung 83 für die Verstelleinrichtung 77 ist dabei durch eine abgewinkelt verlaufend ausgebildete Steuerwand 84 gebildet, die als seitliche Begrenzungswand einer mit der Lade 24 verbundenen, gegenüber der Deckenwand 36 der Lade 24 erhaben ausgebildeten Steuerrippe 85 vorgesehen ist. Von dem plattenförmigen Verstellhebel 78 steht hiebei ein Steuerfortsatz 86 in Richtung zur Deckenwand 36 der Lade 24 hin ab, der mit der als Steuereinrichtung 83 vorgesehenen Steuerwand 84 zusammenwirkt. Hiefür ist weiters eine einerseits an der Niederhalterplatte 66 und andererseits an dem plattenförmigen Verstellhebel 78 angreifende Verstellfeder 87 für den Verstellhebel 78 vorgesehen, mit deren Kraft der vom Verstellhebel 78 abstehende Steuerfortsatz 86 an die abgewinkelt verlaufend ausgebildete Steuerwand 84 andrückbar ist.

Im folgenden ist die Funktionsweise des Gerätes 1 in Bezug auf die vorliegende Erfindung beschrieben. Bei in ihrer Endposition außerhalb des Gerätes 1 befindlichen Lade 24, wie dies in den Figuren 1,4 und 5 dargestellt ist, wird eine Kassette 2 in die Kassettenaufnahmeeinrichtung 25 eingesetzt, die sich hiebei in ihrer in Fig. 5 dargestellten Ladeposition befindet. Danach wird die Lade 24 von dem Motor 32 her angetrieben und über die Zahnstange 35 in Richtung des Pfeiles 44 verschoben, wobei die Kassettenaufnahmeeinrichtung 25 zwischen ihrer Ladeposition und einer in Fig. 6 dargestellten Zwischenposition parallel zur Deckenwand 4 der Kassette 2 verstellt wird. Während dieser Verstellung der Lade 24 rollen die Niederhalterrollen 68 und 69 von den Steuerrippen 71 und 72 herunter und auf die Deckenwand 4 der in die Kassettenaufnahmeeinrichtung 25 eingesetzten Kassette 2, so daß die Niederhalterplatte 66 mit ihren Niederhalterrollen 68, 69 und 70 auf die Deckenwand 4 der Kassette 2 aufgesetzt wird, wodurch die Kassette 2 mit der Kraft der an der Niederhalterplatte 66 angreifenden Zugfeder 73 gegen die Bedenwand 26 der Kassettenaufnahmeeinrichtung 25 gedrückt wird. In weiterer Folge erreicht die Lade 24 ihre andere Endposition, in der sie an der Anschlagleiste 45 anliegt und die in Fig. 6 dargestellt ist. In dieser Situation nimmt die Kassettenaufnahmeeinrichtung 25 ihre Zwischenposition ein.

In weiterer Folge wird die bisher durch die Koppelungskugel 46 gebildete Koppelung zwischen der Zahnstange 35 und der Lade 24 gelöst. Danach wird die Zahnstange 35 aus der in Fig. 6 dargestellten Lage in die in Fig. 7 dargestellte Lage weiterverschoben. Hiebei gleiten die von den beiden Hebeln 50 und 54 seitlich abstehenden Steuerstifte 56 und 58 entlang der an der Zahnstange 35 vorgesehenen Steuerkulissen 57 und 59, wobei in Folge der von der Zugfeder 73 über die Niederhalterplatte 66 und die Niederhalterrollen 68, 69 und 70 auf die Kassette 2 und folglich auf die Kassettenaufnahmeeinrichtung 25 ausgeübten Kraft die Kassettenaufnahmeeinrichtung 25 samt der darin befindlichen Kassette 2 und die Kassettenniederhalteeinrichtung 60 im wesentlichen senkrecht zur Deckenwand 4 der Kassette 2 in die in Fig. 7 dargestellten Positionen verstellt werden. In diesem Fall nimmt dann die Kassettenaufnahmeeinrichtung 25 ihre Betriebsposition ein, in der sich die in der Kassettenaufnahmeeinrichtung 25 befindliche Kassette 2 an den Positionierstiften 74, 75 und 76 abstützt und hiebei mit ihrer Bodenwand 5 geringfügig von der Bodenwand 26 der Kassettenaufnahmeeinrichtung 25 abgehoben ist. Nachdem die vorerwähnten Geräteteile die in der Fig. 7 dargestellten Positionen eingenommen haben, wird über einen von der Zahnstange 35 betätigbaren, nicht dargestellten Schalter der Motor 32 abgeschaltet.

Bezüglich der Funktion der Verstelleinrichtung 77 zum Verstellen des Verschlußteiles 16 der Kassette 2 ist folgendes zu erläutern. Wie vorstehend beschrieben, kommen während der Verstellung der Lade 24 von ihrer in Fig. 5 dargestellten Endposition in ihre in Fig. 6 dargestellte Endposition die Niederhalterrollen 68, 69 und 70 mit der Deckenwand 4 einer in die Kassettenaufnahmeeinrichtung 25 eingesetzten Kassette 2 in Wirkverbindung. In Fig. 8 ist eine Zwischenposition der Lade 24 dargestellt, in der sowohl die Niederhalterrolle 68 von der Steuerrippe 71 als auch die Niederhalterrolle 69 von der Steuerrippe 72 heruntergerollt sind und die Niederhalterrollen 68 und 69 bereits mit der Deckenwand 4 der Kassette 2 in Wirkverbindung stehen, so daß die Niederhalterplatte 66 bereits eine genau definierte Relativlage zur Deckenwand 4 der Kassette 2 einnimmt. In dieser in Fig. 8 dargestellten Zwischenposition liegt der Steuerfortsatz 86 der Verstelleinrichtung 77 noch an der Steuerwand 84 an. Im Zuge der weiteren Verstellung der Lade 24 in Richtung des Pfeiles 44 kommt der abgewinkelte Endbereich der Steuerwand 84 in den Bereich des Steuerfortsatzes 86, wobei dann der Wandbereich 13 der Durchgangsöffnung 10 der Kassette 2 bereits im Bereich des Verstellstiftes 82 liegt. In weiterer Folge gibt die Steuerwand 84 den Steuerfortsatz 86 frei, so daß dann der Verstellhebel 77 samt dem von demselben abstehenden Verstellstift 82 mit der Kraft der Verstellfeder 87 verschwenkt wird, wobei der Verstellstift 82 in die Durchgangsöffnung 10 der Kassette 2 im Bereich des Wandabschnittes 13 eindringt und dabei mit dem Verschlußteil 16 der Kassette 2 in Wirkverbindung tritt. Im Zuge der weiteren Verstellung der Lade 24 in Richtung des Pfeiles 44 wird dann durch die Relativbewegung zwischen dem Verstellstift 82 und der Kassette 2 deren Verschlußteil 16 aus seiner in Fig. 8 dargestellten Schließstellung in seine in Fig. 9 dargestellte Offenstellung verstellt. Diese Verstellung des Verschlußteiles 16 in seine Offenstellung erfolgt somit bereits während der Verstellung der von der Lade 24 verstellbar gehaltenen Kassettenaufnahmeeinrichtung 25 von ihrer in Fig. 5 dargestellten Ladeposition in ihre in Fig. 6 dargestellte Zwischenposition.

Bei in seiner Offenstellung befindlichem Verschlußteil 16 der Kassette 2 ist der Verstellstift 82 zwischen dem Wandabschnitt 14 der Kassette 2 und dem diesem Wandabschnitt 14 gegenüberliegenden Ende des Verschlußteiles 16 eingeklemmt. Beim Verstellen der Kassettenaufnahmeeinrichtung 25 aus ihrer in Fig. 6 dargestellten Zwischenposition, in der der Verschlußteil 16 der Kassette 2 bereits seine Offenstellung einnimmt, in ihre in Fig. 7 dargestellte Betriebsposition findet aufgrund der Tatsache, daß die Niederhalterplatte 60 mit der Lagerplatte 61 verschwenkbar gelagert ist, eine geringfügige Relativbewegung parallel zur Deckenwand 4 der Kassette 2 zwischen der Niederhalterplatte 66 und dem mit dieser verschwenkbar verbundenen Verstellhebel 78 einerseits und der Kassette 2 andererseits statt, was eine kräftemäßige Belastung der Kassette 2 durch den Verstellstift 82 zur Folge hätte. Um eine solche kräftemäßige Belastung der Kassette 2 von vornherein auszuschalten, ist die Schwenklagerung des Verstellhebels 78 an der Niederhalterplatte 66 durch die Stift-Langloch-Verbindung 79 gebildet, die eine Relativbewegung zwischen dem Stift 80 und dem Langloch 81 parallel zur Verstellrichtung 22 des Verschlußteiles 16 zuläßt. Bei in ihre Betriebsposition abgesenkter Kassettenaufnahmeeinrichtung 25 ist infolge der zuvor erwähnten Relativbewegung der Stift 80 der Stift-Langloch-Verbindung 79 vom Ende des Langloches 81 abgehoben, so daß über die Stift-Langloch-Verbindung keine äußeren Kräfte auf den Verstellhebel 78 und folglich über den Verstellstift 82 auf die Kassette 2 ausgeübt werden können.

Aufgrund der Tatsache, daß die Verstelleinrichtung 77 des vorliegendes Gerätes 1 an dem Niederhalterträger 66 angebracht ist, ist auf besonders einfache Weise erreicht, daß die Deckenwand 4 einer in die Kassettenaufnahmeeinrichtung 25 eingesetzten Kassette 2, deren Verschlußteil 16 geöffnet und danach auch wieder geschlossen werden soll, eine Referenzfläche zur Festlegung der Position der Verstelleinrichtung 77 für den Verschlußteil 16 gegenüber der Kassette 2 bildet, was zur Folge hat, daß eine in einem sehr engen Toleranzbereich liegende Relativlage des Verstellteiles 82 der Verstelleinrichtung 77 gegenüber dem Verschlußteil 16 der Kassette 2 erreicht wird. Aufgrund dieses besonders engen Toleranzbereiches der vorerwähnten Relativlage ist praktisch stets für eine sichere Verstellfunktion für den Verschlußteil 16 der Kassette 2 gesorgt.

Die Erfindung ist nicht auf das vorstehend beschriebene Ausführungsbeispiel beschränkt, sondern es sind auch andere Ausführungsvarianten möglich. Beispielsweise kann die Erfindung auch bei einem Gerät zum Einsatz kommen, bei dem eine am Chassis des Gerätes stationär gehaltene bzw. angeordnete Kassettenaufnahmeeinrichtung vorgesehen ist, die mit einem am Gerätegehäuse verschwenkbar gelagerten Deckel verschließbar ist, an dessen Innenseite eine Kassettenniederhalteeinrichtung samt einer daran verstellbar gehaltenen Verstelleinrichtung vorgesehen sind. Auch kann die Erfindung bei einem Gerät Anwendung finden, das eine um eine Schwenkachse verschwenkbare Kassettenaufnahmeeinrichtung aufweist. Weiters kann auch die Niederhalteeinrichtung eine andere Ausbildung aufweisen. Weiters sind auch andere Ausführungsvarianten für die Verstelleinrichtung möglich.

## Patentansprüche

1. Aufzeichnungs- und/oder Wiedergabegerät 1 für eine Magnetbandkassette 2, die ein quaderförmiges Gehäuse 3 mit einer Deckenwand 4, einer Bodenwand 5 und vier Seitenwänden 6, 7, 8, 9, von denen eine 6 zumindest mit einer Durchgangsöffnung 10, 11, 12 versehen ist, und einen zwischen einer Schließstellung und einer Offenstellung verstellbaren Verschlußteil 16 zum Verschließen der Durchgangsöffnung 10, 11, 12 aufweist, mit einem Chassis 41, mit einer am Chassis 41 gehaltenen, zum Aufnehmen einer Kassette 2 vorgesehenen Kassettenaufnahmeeinrichtung 25 und mit einer zum Verstellen des Verschlußteiles 16 der von der Kassettenaufnahmeeinrichtung 25 gehaltenen Kassette 2 vorgesehenen Verstelleinrichtung 77, die einen die Deckenwand 4 der Kassette 2 zumindest teilweise überdeckenden verstellbaren Trägerteil 78 und einen von dem Trägerteil 78 abstehenden, mit dem Verschlußteil 16 der Kassette 2 in Eingriff bringbaren Verstellteil 82 aufweist, der bei einer Relativbewegung zwischen ihm und dem Verschlußteil 16 dessen Verstellung steuert, dadurch gekennzeichnet, daß eine verstellbar gehaltene Niederhalteeinrichtung 60 vorgesehen ist, die einen Niederhalterträger 66 aufweist, der in eine die Deckenwand 4 der Kassette 2 zumindest teilweise überdeckende Position bringbar ist und der mit mindestens einem auf die Deckenwand 4 der Kassette 2 aufsetzbaren Niederhalterteil 68, 69, 70 versehen ist, und mit der eine in die Kassettenaufnahmeeinrichtung 25 eingesetzte Kassette 2 nach dem Aufsetzen des Niederhalterteiles 68, 69, 70 auf ihre Deckenwand 4 mit ihrer Dodenwand 5 gegen die Kassettenaufnahmeeinrichtung 25 drückbar ist, und daß die Verstelleinrichtung 77 an dem Niederhalterträger 66 der Niederhalteeinrichtung 60 verstellbar gehalten ist und daß der Verstellteil 82 der Verstelleinrichtung 77 nach dem Aufsetzen des Niederhalterteiles 68, 69, 70 auf die Deckenwand 4 der Kassette 2 mit dem Verschlußteil 16 der Kassette 2 in Eingriff bringbar ist.

2. Gerät nach Anspruch 1 für eine Magnetbandkassette, die einen längs einer Seitenwand 6 derselben parallel zu einer ersten Verstellrichtung 22 verschiebbaren Verschlußteil 16 aufweist, dadurch gekennzeichnet, daß die Kassettenaufnahmeeinrichtung 25 am Chassis 41 verstellbar gehalten ist und zwischen einer Ladeposition und einer Zwischenposition parallel zu der Deckenwand 4 der Kassette 2 und parallel zu der ersten Verstellrichtung 22 und zwischen der Zwischenposition und einer Betriebsposition senkrecht zu der Deckenwand 4 der Kassette 2 verstellbar ist, daß der Niederhalterträger 66 am Chassis 41 im wesentlichen senkrecht zur Deckenwand 4 der Kassette 2 verstellbar gehalten ist und beim Verstellen der Kassettenaufnahmeeinrichtung 25 von ihrer Ladeposition in ihre Zwischenposition mit seinem Niederhalterteil 68, 69, 70 auf die Deckenwand 4 der Kassette 2 aufgesetzt wird und daß eine Steuereinrichtung 83 für die von dem Niederhalterträger 66 der Niederhalteeinrichtung 60 gehaltene Verstelleinrichtung 77 vorgesehen ist, die beim Verstellen der Kassettenaufnahmeeinrichtung 25 von ihrer Ladeposition in ihre Zwischenposition parallel zur ersten Verstellrichtung 22 nach dem Aufsetzen des Niederhalterteiles 68, 69, 70 auf die Deckenwand 4 der Kassette 2 die Verstelleinrichtung 77 in eine das Zusammenwirken des Verstellteiles 82 mit dem Verschlußteil 16 der Kassette 2 bewirkende Lage steuert, um den Verschlußteil 16 parallel zu der ersten Verstellrichtung 22 von seiner Schließstellung in seine Offenstellung zu verstellen. (Fig. 5, 6, 7, 8, 9)

3. Gerät nach Anspruch 2, dadurch gekennzeichnet, daß der Niederhalterträger der Niederhalteeinrichtung 60 im wesentlichen durch eine bei auf die Deckenwand 4 aufgesetztem Niederhalterteil 68, 69, 70 die Deckenwand 4 der Kassette 2 zumindest größtenteils überdeckende Niederhalterplatte 66 gebildet ist und daß die an der Nlederhalterplatte 66 verstellbar gehaltene Verstelleinrichtung 77 einen im wesentlichen plattenförmigen, parallel zur Niederhalterplatte 66 verlaufend angeordneten Verstellhebel 78 aufweist, der an der Niederhalterplatte 66 um ein Schwenklager 79 verschwenkbar gelagert ist. (Fig. 5, 6, 7, 8, 9)

4. Gerät nach Anspruch 3, dadurch gekennzeichnet, daß von dem plattenförmigen Verstellhebel 78 als Verstellteil ein Verstellstift 82 und weiters ein Steuerfortsatz 86 zum Zusammenwirken mit der Steuereinrichtung 83 für die Verstelleinrichtung 77 im wesentlichen senkrecht abstehen. (Fig. 8, 9)

5. Gerät nach Anspruch 4, dadurch gekennzeichnet, daß eine einerseits an der Niederhalterplatte 66 und andererseits an dem plattenförmigen Verstellhebel 78 angreifende Verstellfeder 87 für den Verstellhebel 78 vorgesehen ist und daß die Steuereinrichtung 83 für die Verstelleinrichtung 77 eine abgewinkelt verlaufend ausgebildete Steuerwand 84 aufweist, an die der vom Verstellhebel 78 abstehende Steuertortsatz 86 mit der Kraft der Verstellfeder 87 andrückbar ist. (Fig. 8, 9)

6. Gerät nach einem der Ansprüche 3 bis 5, dadurch gekennzeichnet, daß das Schwenklager zwischen dem plattenförmigen Verstellhebel 78 und der Niederhalterplatte 66 durch eine Stift-Langloch-Verbindung 79 gebildet ist und daß der Stift 80 in dem Langloch 81 parallel zur ersten Verstellrichtung 22 verstellbar ist. (Fig. 8, 9)
